# EUROPEAN PATENT SPECIFICATION

(11) **EP 1 696 009 B1**
(45) Date of publication and mention of the grant of the patent: **29.12.2010**
(21) Application number: 06101176.3
(22) Date of filing: 02.02.2006
(51) Int. Cl.: C09D 11/00

(54) **Ink-jet ink compositions for use in off-axis printers**
Tintenzusammensetzung für den Tintenstrahldruck für den Gebrauch in nichtaxialen Druckern
Composition d' encre par jet d' encre pour l' utilisation en imprimante hors-axe

(30) Priority: 24.02.2005 US 65207
(43) Date of publication of application: 30.08.2006
(73) Proprietor: HEWLETT-PACKARD DEVELOPMENT COMPANY, L.P., Houston, TX 77070 (US)
(72) Inventor: REHMAN, Zi Hewlett-Packard Company, Corvallis OR Oregon 97330 (US); THORNBERRY, Matthew Hewlett-Packard Company, Corvallis, OR Oregon 97330-4239 (US)
(74) Representative: Lawman, Matthew John Mitchell

(56) References cited:
- EP-A- 1 077 239
- EP-A- 1 213 332
- EP-A- 1 308 489
- WO-A-2005/118727
- US-A- 5 534 051
- US-A- 5 695 820
- US-A- 5 725 641

## Description

### FIELD OF THE INVENTION

The present invention relates generally to ink-jet inks. More particularly, the present invention relates to ink-jet ink compositions having reduced vapor loss rates and reduced clogging when utilized in off-axis print systems.

### BACKGROUND OF THE INVENTION

Ink-jet printing involves the placement of small drops of a fluid ink onto a media surface in response to a digital signal. Typically, the fluid ink is placed or jetted onto the surface without physical contact between the printing device and the surface.

Today, many printers have an onboard ink system. The onboard ink system typically involves a multi-color ink supply and printhead combined into one ink dispensing unit. Other ink delivery systems are also available, such as off-axis ink systems or off-axis print systems. Off-axis print systems provide offboard or off-axis ink reservoirs which are configured to supply ink to onboard printheads by utilizing small flexible tubes that transport ink from color separate stationary supply cartridges to a moving printhead.

Ink-jet ink systems used by typical consumers are often exposed to various environmental conditions during storage and customer use. Particularly, after some use, consumers may not use the printer for an extended period of time, or even store a printer in less than optimal storage conditions. For example, storage of a printer in hot and/or dry environments can cause the ink present in the dispensing system to undergo a phenomenon known as vapor loss, which can cause the ink to solidify in ink delivery system tubes. The solidified ink is often insoluble with respect to fresh ink, and thus, contact with the fresh ink can form sludge, exacerbating clogging further.

### FIELD OF THE INVENTION

The present invention relates generally to ink-jet inks. More particularly, the present invention relates to ink-jet ink compositions having reduced vapor loss rates and reduced clogging when utilized in off-axis print systems.

### BACKGROUND OF THE INVENTION

Ink-jet printing involves the placement of small drops of a fluid ink onto a media surface in response to a digital signal. Typically, the fluid ink is placed or jetted onto the surface without physical contact between the printing device and the surface.

Today, many printers have an onboard ink system. The onboard ink system typically involves a multi-color ink supply and printhead combined into one ink dispensing unit. Other ink delivery systems are also available, such as off-axis ink systems or off-axis print systems. Off-axis print systems provide offboard or off-axis ink reservoirs which are configured to supply ink to onboard printheads by utilizing small flexible tubes that transport ink from color separate stationary supply cartridges to a moving printhead.

Ink-jet ink systems used by typical consumers are often exposed to various environmental conditions during storage and customer use. Particularly, after some use, consumers may not use the printer for an extended period of time, or even store a printer in less than optimal storage conditions. For example, storage of a printer in hot and/or dry environments can cause the ink present in the dispensing system to undergo a phenomenon known as vapor loss, which can cause the ink to solidify in ink delivery system tubes. The solidified ink is often insoluble with respect to fresh ink, and thus, contact with the fresh ink can form sludge, exacerbating clogging further.

For the foregoing reasons, there is a need for an ink-jet ink composition that remains liquid and clog friendly in an off-axis print system when subjected to adverse environmental conditions.

### SUMMARY OF THE INVENTION

It has been recognized that it would be advantageous to devise a system that reduces ink solidification or the rate of vapor loss that can occur in the ink delivery system tubes, fittings, and/or other components present in off-axis printer systems. Specifically, an ink-jet ink composition can comprise an aqueous liquid vehicle including at least three co-solvents selected from the group consisting of tetraethylene glycol, glycerol, diglycerol, 1,5-pentanediol, 2-pyrrolidone, ethylhydroxy-propanediol, wherein the at least three co-solvents can be present in combination in the ink-jet ink at from 10 wt% to 25 wt%, and one of the at least three co-solvents is diglycerol. The aqueous liquid vehicle can also carry a colorant, such as a dye.

In another embodiment, a system for printing an ink-jet ink can comprise an ink supply cartridge containing an ink-jet ink and an off-axis printer including ink delivery system tubes and a printhead, wherein the ink delivery tubes are configured for transferring the ink-jet ink from the ink supply cartridge to the printhead. The ink-jet ink can include an aqueous liquid vehicle having at least three co-solvents selected from the group consisting of tetraethylene glycol, glycerol, diglycerol, 1,5-pentanediol, 2-pyrrolidone, ethylhydroxy-propanediol, wherein the at least three co-solvents are present in combination in the ink-jet ink at from 10 wt% to 25 wt%, and one of the at least three co-solvents is diglycerol. A dye is also typically present to provide color to the ink-jet ink.

In another embodiment, a method of printing can comprise jetting an ink-jet ink from an off-axis printer. The off-axis printer can include an ink-supply cartridge, ink delivery system tubes, and a printhead, wherein the ink delivery tubes are configured for transferring the ink-jet ink from the ink supply cartridge to the printhead. The ink-jet ink can include an aqueous liquid vehicle including at least three co-solvents selected from the group consisting of tetraethylene glycol, glycerol, diglycerol, 1,5-pentanediol, 2-pyrrolidone, ethylhydroxy-propanediol. These at least three co-solvents can be present in combination in the ink-jet ink at from 10 wt% to 25 wt%, and one of the at least three co-solvents is diglycerol. Additionally, a colorant, such a dye will also typically be present in the ink-jet ink.

Additional features and advantages of the invention will be apparent from the detailed description which follows, taken in conjunction with the accompanying drawing, which together illustrate, by way of example, features of the invention.

### BRIEF DESCRIPTION OF THE DRAWINGS

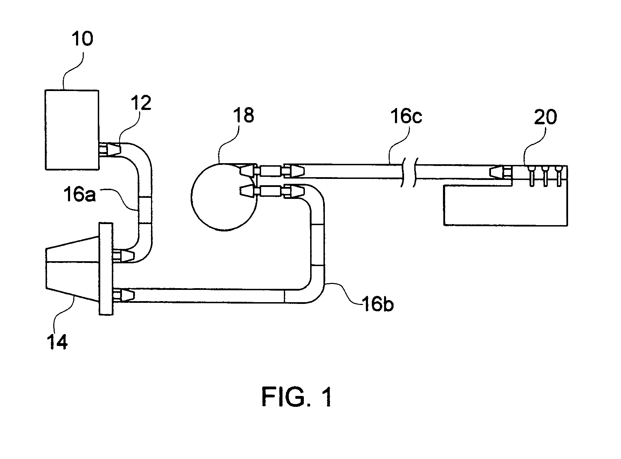

FIG. 1 is a schematic view of an off-axis print system in accordance with an embodiment of the present invention.

### DETAILED DESCRIPTION OF THE PREFERRED EMBODIMENT(S)

Before particular embodiments of the present invention are disclosed and described, it is to be understood that this invention is not limited to the particular process and materials disclosed herein as such may vary to some degree. It is also to be understood that the terminology used herein is used for the purpose of describing particular embodiments only and is not intended to be limiting, as the scope of the present invention will be defined only by the appended claims and equivalents thereof.

In describing and claiming the present invention, the following terminology will be used.

The singular forms "a," "an," and "the" include plural referents unless the context clearly dictates otherwise. Thus, for example, reference to "a dye" includes reference to one or more of such materials.

As used herein, "liquid vehicle" is defined to include liquid compositions that can be used to carry colorants to a substrate. Liquid vehicles are well known in the art, and a wide variety of ink vehicles may be used in accordance with embodiments of the present invention. Such ink vehicles may include a mixture of a variety of different agents, including without limitation, surfactants, solvents, co-solvents, buffers, biocides, viscosity modifiers, sequestering agents, stabilizing agents, and water. The liquid vehicle can also carry other additives such as polymers, UV curable materials, plasticizers, and/or co-solvents in some embodiments.

As used herein, "clogging" refers to the at least partial solidifying of a liquid ink that can occur within tubes, fittings, or other components of an off-axis print system. Irrespective of solid clogs, clogging can manifest itself by an increase in the nominal pressure required to pump ink through the system, as pumps typically used in these type of systems typically have relatively tight pressure budgets.

The term "about" when referring to a numerical value or range is intended to encompass the values resulting from experimental error that can occur when taking measurements.

As used herein, "effective amount" refers to at least the minimal amount of a substance or agent, which is sufficient to achieve a desire effect. For example, an effective amount of "a dye" is at least the minimum amount required in order to create a desired color.

Ratios, concentrations, amounts, and other numerical data numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and subrange is explicitly recited. For example, a weight range of about 1 wt% to about 20 wt% should be interpreted to include not only the explicitly recited concentration limits of 1 wt% to about 20 wt%, but also to include individual concentrations such as 2 wt%, 3 wt%, 4 wt%, and sub-ranges such as 5 wt% to 15 wt%, 10 wt% to 20 wt%, etc.

The present invention is drawn to an ink-jet ink composition that has increased integrity in off-axis print systems. More particularly, the present invention includes an ink-jet ink composition that reduces the risk of clogging through a combination of reduced vapor loss from fittings, interfaces, couplers, walls of ink delivery system tubes, and/or other components of certain printing systems. As a result, when clogs (including nominal pressure changes) form, such clogs tend to be more liquid, and thus, can be more amenable to dislodging using the pump. Alternatively, clogs that form can also be more soluble with respect to incoming fresh ink, thus reducing the occurrence of irreversible clogging.

Particularly it has been recognized that certain solvents used in combination with a liquid vehicle reduces the rate of vapor loss, enabling the ink to remain liquid after prolong exposure to adverse environmental conditions, such as heat and low humidity.

The ink-jet ink compositions of the present invention are particularly useful in off-axis print systems, which use ink delivery system tubes to transport ink to at least one moving printhead. Though the material of the ink delivery system tubes can be changed to aid in the vapor loss reduction, many materials that can reduce vapor loss can crack after prolonged exposure to the environment. Stronger and stiffer materials would also require more force from the carriage motor. This increases the size of the motor and hence the printer as well. The ink compositions, described herein, provide an alternative method to reduce the vapor loss and clogging, or when some clogging occurs, such clogging can be overcome by nominal pump pressure through the ink delivery system tubes and other off-axis printer components.

As mentioned, the ink-jet ink compositions of the present invention are typically prepared in an aqueous liquid vehicle which can include water, co-solvents, surfactants, buffering agents, biocides, sequestering agents, viscosity modifiers, humectants, binders, and/or other known additives. In one aspect of the present invention, the liquid vehicle can comprise from about 70 wt% to about 99.9 wt% by weight of the ink-jet ink composition. In another aspect, other than the dye, liquid vehicle can also carry polymeric binders, latex particulates, and/or other solids.

An appropriate dye that can be used with the present invention is any dye that experiences vapor loss in an off-axis print system when exposed to adverse environmental conditions. In one embodiment, the dye can be Yellow Y-1189, which is an azo dye including a naphthalenedisulfonic acid and a triazine group. Thus, an exemplary ink composition can comprise an aqueous liquid vehicle as described in accordance with embodiments of the present invention, and an effective amount of a Yellow Y-1189 dye.

Yellow Y-1189 is typically prepared as a sodium salt, though other salts forms can also be used. In addition to this particular yellow dye, other dyes may also be suitable for use in accordance with embodiments of the present invention, including AB9, Direct Blue 199, Direct Blue 186, Basic Violet 7, Disperse Red 60, pacified Reactive Red 23, Reactive Red 180, Acid Red 52, Acid Red 289, Acid Yellow 23, Acid Yellow 17, Acid Yellow 79, Y104, Direct Yellow 86, Direct Yellow 132, Direct Black 168, Fast Black 2, Fast Black 2, Food Black 2, and pacified Reactive Black 31.

As described, the ink-jet ink composition of the present invention includes co-solvents. Co-solvents used in the present invention include at least three selected from the group consisting of tetraethylene glycol, glycerol, diglycerol, 1,5-pentanediol, 2-pyrrolidone, and ethylhydroxy-propanediol. These co-solvents are added to reduce the rate of evaporation of water in the ink through the ink delivery system tubes and fittings, thus minimizing clogging. The at least three co-solvents listed above can have a total concentration in a range from about 10 wt% to about 25 wt%, and in one embodiment, the range can be from about 14 wt% to about 18 wt%. Other co-solvents can also be present, and can include water soluble organic co-solvents such as, generally, aliphatic alcohols, aromatic alcohols, diols, glycol ethers, poly(glycol) ethers, lactams, formamides, acetamides, long chain alcohols, ethylene glycol, propylene glycol, diethylene glycols, triethylene glycols, glycerine, dipropylene glycols, glycol butyl ethers, polyethylene glycols, polypropylene glycols, amides, ethers, carboxylic acids, esters, organosulfides, organosulfoxides, sulfones, alcohol derivatives, carbitol, butyl carbitol, cellosolve, ether derivatives, amino alcohols, and ketones. For example, co-solvents can include primary aliphatic alcohols of 30 carbons or less, primary aromatic alcohols of 30 carbons or less, secondary aliphatic alcohols of 30 carbons or less, secondary aromatic alcohols of 30 carbons or less, 1,2-diols of 30 carbons or less, 1,3-diols of 30 carbons or less, 1,5-diols of 30 carbons or less, ethylene glycol alkyl ethers, propylene glycol alkyl ethers, poly(ethylene glycol) alkyl ethers, higher homologs of poly(ethylene glycol) alkyl ethers, poly(propylene glycol) alkyl ethers, higher homologs of poly(propylene glycol) alkyl ethers, lactams, substituted formamides, unsubstituted formamides, substituted acetamides, dipropylene glycol, propylene glycol, glycerol ethoxylate, diethylene glycol, ethylene glycol, triethylene glycol, unsubstituted acetamides, sulfolane, and 3-pyridylcarbinol. Regardless of the cosolvents present, the at least three cosolvents selected from the group consisting of tetraethylene glycol, glycerol, diglycerol, 1,5-pentanediol, 2-pyrrolidone, and ethylhydroxy-propanediol are present to reduce vapor loss and reduce clogging.

In one aspect of the present invention, a solubility enhancing additive can also be added to the ink-jet ink to further reduce clogging. For example, one such additive is magnesium nitrate. It has been discovered through experimentation that magnesium nitrate combined with the aqueous liquid vehicle and dye can further reduce the vapor loss rate that can occur, and thus, reduces clogging.

Various buffering agents or pH adjusting agents can also be optionally used in the ink-jet ink compositions of the present invention. Typical buffering agents include such pH control solutions as hydroxides of alkali metals and amines, such as lithium hydroxide, sodium hydroxide, potassium hydroxide; citric acid; amines such as triethanolamine, diethanolamine, and dimethylethanolamine; hydrochloric acid; and other basic or acidic components which do not substantially interfere with the bleed control or optical density characteristics of the present invention. Other examples of acceptable organic buffers include without limitation, Trizma Base, available from companies such as Aldrich Chemical (Milwaykee, Wis.), 4-morpholineethanesulfonic acid (MES), and 4-morpholinepropane sulfonic acid (MOPS). In one aspect of the present invention the buffer may be MOPS. If used, buffering agents typically comprise less than about 5 wt% of the ink-jet ink composition and often from about 0.1 wt% to about 0.25 wt%.

In yet another aspect of the present invention, various biocides or preservatives can be used to inhibit growth of undesirable microorganisms. Several non-limiting examples of suitable biocides include benzoate salts, sorbate salts, commercial products such as NUOSEPT (Nudex, Inc., a division of Huls America), UCARCIDE (Union Carbide), VANCIDE (RT Vanderbilt Co.), and PROXEL (ICI Americas) and other known biocides. Typically, such biocides comprise less than about 5 wt% of the ink-jet ink composition and often about 0.1 wt% of the total composition.

In an additional aspect of the present invention, binders can be included which act to secure the dyes on the substrate. Binders suitable for use in the present invention typically comprise less than 5 wt% of the ink-jet ink composition. Non-limiting examples include polyester, polyester-melanine, styrene-acrylic acid copolymers, styrene-acrylic acid-alkyl acrylate copolymers, styrene-maleic acid copolymers, styrene-maleic acid-alkyl acrylate copolymers, styrene-methacrylic acid copolymers, styrene-methacrylic acid-alkyl acrylate copolymers, styrene-maleic half ester copolymers, vinyl naphthalene-acrylic acid copolymers, vinyl naphthalene-maleic acid copolymers, and salts thereof.

In addition, surfactants can also used in accordance with embodiments of the present invention. Surfactants can have multiple functions in an ink formulation. In water-based inks, they can function as wetting agents, keeping the surface tension of the aqueous vehicle low so that the ink interacts favorably with a substrate. Surfactants suitable for use in the present invention are non-ionic and anionic surfactants. Other surfactants may be used in the present invention such typical water-soluble surfactants such as alkyl polyethylene oxides, alkyl phenyl polyethylene oxides, polyethylene oxide (PEO) block copolymers, acetylenic PEO, PEO esters, PEO amines, PEO amides, and dimethicone copolyols can be used. Typically, such surfactants comprises less than 5 wt% of the ink-jet ink composition, more often from about 0.2 wt% to 0.95 wt%.

The ink compositions described above can be used in an off-axis print system as illustrated in FIG 1. An off-axis print system generally comprises a vent or bubbling chamber 10 to relieve the system of excess air. A supply cartridge 14, which typically contains an ink-jet ink composition, can be coupled to the bubbling chamber 10 via ink delivery system tubing 16a via fittings 12. In the embodiment shown, ink delivery system tubing 16a is not configured to carry ink, as this section is acting as a venting tube. Ink delivery system tubing 16b and 16c are configured to carry ink in this embodiment. Regarding the ink delivery system tubing in general, this material usually has an inner diameter of about 0.1 to 2 mm, and the length can be from about 1 inch to 24 inches, and is generally comprised of a material such as polyvinyl chloride, polyurethane, polyethylene, polypropylene, ethylene propylene dieneterpolymer (EPDM), EPDM-butyl, or silicone. In the system shown, as stated, the ink-jet ink composition can be delivered from the supply cartridge to the printhead 20 via ink delivery system tubing 16b and 16c. A peristaltic pump 18 is positioned along a path defined by the ink delivery system tubing 16b and 16c, and acts to cause the flow of the ink from the supply cartridge to the printhead.

### EXAMPLES

The following examples illustrate the embodiments of the invention that are presently best known. However, it is to be understood that the following are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following examples provide further detail in connection with what are presently deemed to be the most practical and preferred embodiments of the invention.

### Example 1

Five ink-jet inks were prepared in accordance with Tables 1-5 as follows: The pH of all of the following formulations can be adjusted by NaOH, KOH, or any other base to a pH of around 7.2.

**Table 1 - Ink-jet ink formulation 1**

| **Ingredient** | **Wt%** |
|---|---|
| Ethylhydroxy-propanediol | 3.0 - 7.0% |
| 2-pyrrolidinone | 3.0 - 7.0% |
| Tetraethylene glycol | 3.0 - 7.0% |
| Yellow Y-1189 dye | 2.5 - 6.5% |
| Non-ionic Surfactant | 0.50 - 1.0% |
| Anionic Surfactant | 0.1 - 0.5% |
| Biocide | 0.01 - 0.3% |
| Buffer | 0.01 - 0.4% |
| Water | balance |

**Table 2 - Ink-jet ink formulation 2**

| **Ingredient** | **Wt%** |
|---|---|
| diglycerol | 3.0 - 7.0% |
| Ethylhydroxy- propanediol | 3.0 - 7.0% |
| 2-pyrrolidinone | 3.0 - 7.0% |
| Yellow Y-1189 dye | 2.5 - 6.5% |
| Non-ionic Surfactant | 0.50 - 1.0% |
| Anionic Surfactant | 0.1 - 0.5% |
| Biocide | 0.01 - 0.3% |
| Buffer | 0.01 - 0.4% |
| Water | balance |

**Table 3 - Ink-jet ink formulation 3**

| **Ingredient** | **Wt%** |
|---|---|
| diglycerol | 3.0 - 7.0% |
| Ethylhydroxy-propanediol | 3.0 - 7.0% |
| 2-pyrrolidinone | 3.0 - 7.0% |
| Yellow Y-1189 dye | 2.5 - 6.5% |
| Magnesium nitrate | 0.5 - 4.0% |
| Non-ionic Surfactant | 0.50 - 1.0% |
| Anionic Surfactant | 0.1 - 0.5% |
| Biocide | 0.01 - 0.3% |
| Buffer | 0.01 - 0.4% |
| Water | balance |

**Table 4 - Ink-jet ink formulation 4**

| **Ingredient** | **Wt%** |
|---|---|
| 1,5-pentanediol | 3.0 - 7.0% |
| 2-pyrrolidinone | 3.0 - 7.0% |
| Tetraethylene glycol | 2.0 - 6.0% |
| Yellow Y-1189 dye | 2.5 - 6.5% |
| Magnesium nitrate | 0.5 - 4.0% |
| Non-ionic Surfactant | 0.50 - 1.0% |
| Anionic Surfactant | 0.1 - 0.5% |
| Biocide | 0.01 - 0.3% |
| Buffer | 0.01 - 0.4% |
| Water | balance |

**Table 5 - Ink-iet ink formulation 5**

| **Ingredient** | **Wt%** |
|---|---|
| 1,5-pentanediol | 3.0 - 7.0% |
| 2-pyrrolidinone | 5.0 - 9.0% |
| 2-methyl-1,3-propanediol | 1.0 - 5.0% |
| Yellow Y-1189 dye | 2.5 - 6.5% |
| Non-ionic Surfactant | 0.5 - 1.0% |
| Anionic Surfactant | 0.01 - 0.4% |
| Biocide | 0.01 - 0.3% |
| Buffer | 0.01 - 0.4% |
| Water | balance |

### Example 2

The ink-jet ink compositions of Tables 1 to 5 above are each loaded in an off-axis print system and are subjected to temperature conditions of 20°C to 70°C for about 0.1 to 1 months under dry conditions of 20% RH. After this time period, the ink-jet ink compositions of tables 1 to 4 remained as a jettable liquid composition which could be pumped along with the fresh ink with the nominal pressure by means of pump 18. The ink-jet ink composition of Table 5 when subjected to these conditions formed sludge at various locations within the tubing and fittings of the off-axis printer. This sludge required higher than nominal pressure to be pumped with the pump 18 and was insoluble with the fresh incoming ink

While the invention has been described with reference to certain preferred embodiments, those skilled in the art will appreciate that various modifications, changes, omissions, and substitutions can be made without departing from the scope of the invention. It is therefore intended that the invention be limited only by the scope of the appended claims.

## Claims

1. An ink-jet ink composition, comprising:
a) an aqueous liquid vehicle including at least three co-solvents selected from the group consisting of tetraethylene glycol, glycerol, diglycerol, 1,5-pentanediol, 2-pyrrolidone, ethylhydroxy-propanediol, said at least three co-solvents being present in combination in the ink-jet ink at from 10 wt% to 25 wt%, one of said at least three co-solvents being diglycerol; and
b) a dye.

2. The ink-jet ink composition of claim 1, wherein glycerol is present at from 0.1 wt% to 5 wt%; tetraethylene glycol is present at from 0.1 wt% to 10 wt%; diglycerol is present at from 0.1 wt% to 10 wt%; an ink-jet ink composition as in claim 1, wherein 1,5-pentanediol is present at from 0.1 wt% to 10 wt%; wherein 2-pyrrolidone is present at from 0.1 wt% to 10 wt%; and ethylhydroxy-propanediol is present at from 0.1 wt% to 10 wt%.

3. An ink-jet ink composition as in any of claims 1 and 2, further comprising from 0.1 wt% to 3 wt% of magnesium nitrate.

4. An ink-jet ink composition as in any of claims 1 through 3, wherein the dye is Yellow Y-1189.

5. An ink-jet ink composition as in any of claims 1 through 4, wherein the at least three solvents are diglycerol, ethylhydroxy-propanediol, and 2-pyrrolidone.

6. A method of printing, comprising jetting an ink-jet ink from an off-axis printer, said off-axis printer including:
a) an ink-supply cartridge,
b) ink delivery system tubes, and
c) a printhead,
said ink delivery tubes configured for transferring the ink-jet ink from the ink supply cartridge to the printhead, said ink-jet ink including:
a) an aqueous liquid vehicle including at least three co-solvents selected from the group consisting of tetraethylene glycol, glycerol, diglycerol, 1,5-pentanediol, 2-pyrrolidone, ethylhydroxy-propanediol, said at least three co-solvents being present in combination in the ink-jet ink at from 10 wt% to 25 wt%, one of said at least three co-solvents being diglycerol, and
b) a dye.

7. A method as in claim 6, wherein the at least three solvents reduce vapor loss and clogging in said ink delivery system tubes.

8. A method as in any of claims 6 and 7, wherein the ink-jet ink further comprises from 0.1 wt% to 3 wt% of magnesium nitrate.

9. A method as in any of claims 6 through 8, wherein the dye is Yellow Y-1189.

10. A method as in any of claims 6 through 9, wherein the at least three solvents are diglycerol, ethylhydroxy-propanediol, and 2-pyrrolidone.

## Patentansprüche

1. Eine Tintenstrahltintenzusammensetzung, umfassend:
a) eine wässrige flüssige Trägersubstanz einschließlich mindestens drei Co-Lösungsmitteln, ausgewählt aus der Gruppe, die aus Tetraethylen-Glykol, Glycerin, Diglycerin, 1,5-Pentandiol, 2-Pyrrolidon, Ethylhydroxy-Propandiol besteht, wobei die mindestens drei Co-Lösungsmittel in Kombination in der Tintenstrahltinte von 10 Gew.-% bis 25 Gew.-% vorhanden sind und eines der mindestens drei Co-Lösungsmittel Diglycerin ist, und
b) einen Farbstoff.

2. Tintenstrahltintenzusammensetzung nach Anspruch 1, wobei Glycerin von 0,1 Gew.-% bis 5 Gew.-% vorhanden ist; Tetraethylen-Glykol von 0,1 Gew.-% bis 10 Gew.-% vorhanden ist; Diglycerin von 0,1 Gew.-% bis 10 Gew.-% vorhanden ist; Tintenstrahltintenzusammensetzung nach Anspruch 1, wobei 1,5-Pentandiol von 0,1 Gew.-% bis 10 Gew.-% vorhanden ist, wobei 2-Pyrrolidon von 0,1 Gew.-% bis 10 Gew.-% vorhanden ist, und Ethylhydroxy-Propandiol von 0,1 Gew.-% bis 10 Gew.-% vorhanden ist.

3. Tintenstrahltintenzusammensetzung nach irgendeinem der Ansprüche 1 und 2 weiter umfassend: 0,1 Gew-% bis 3 Gew-% Magnesiumnitrat.

4. Tintenstrahltintenzusammensetzung nach irgendeinem der Ansprüche 1 bis 3, wobei der Farbstoff Gelb Y-1189 ist.

5. Tintenstrahltintenzusammensetzung nach irgendeinem der Ansprüche 1 bis 4, wobei die mindestens drei Lösungsmittel Diglycerin, Ethylhydroxy-Propandiol und 2-Pyrrolidon sind.

6. Ein Druckverfahren umfassend: das Ausstoßen einer Tintenstrahltinte von einem außeraxialen Drucker, wobei der außeraxiale Drucker umfasst:
a) eine Tintenzuführungskassette,
b) Tintenzuführungsrohre und
c) einen Druckkopf,
wobei die Tintenzuführungsrohre so konfiguriert sind, die Tintenstrahltinte von der Tintenvorratskassette zum Druckkopf zu übertragen, wobei die Tintenstrahltinte umfasst:
a) eine wässrige flüssige Trägersubstanz einschließlich mindestens drei Co-Lösungsmitteln, ausgewählt aus der Gruppe, die aus Tetraethylen-Glykol, Glycerin, Diglycerin, 1,5-Pentandiol, 2-Pyrrolidon, Ethylhydroxy-Propandiol besteht, wobei die mindestens drei Co-Lösungsmittel in Kombination in der Tintenstrahltinte von 10 Gew-% bis 25 Gew-% vorhanden sind und eines der mindestens drei Co-Lösungsmittel Diglycerin ist, und
b) einen Farbstoff.

7. Verfahren nach Anspruch 6, wobei die mindestens drei Lösungsmittel Dampfverlust und Verstopfung in den Tintenzuführungsrohren reduzieren.

8. Verfahren nach irgendeinem der Ansprüche 6 und 7, wobei die Tintenstrahltinte weiter von 0,1 Gew-% bis 3 Gew-% an Magnesiumnitrat umfasst.

9. Verfahren nach irgendeinem der Ansprüche 6 bis 8, wobei der Farbstoff Gelb Y-1189 ist.

10. Verfahren nach irgendeinem der Ansprüche 6 bis 9, wobei die mindestens drei Lösungsmittel Diglycerin, Ethylhydroxy-Propandiol und 2-Pyrrolidon sind.

## Revendications

1. Composition d'encre jet d'encre, comprenant :
a) un véhicule liquide aqueux comprenant au moins trois cosolvants sélectionnés dans le groupe constitué par le tétraéthylène glycol, le glycérol, le diglycérol, le 1,5-pentanediol, le 2-pyrrolidone, l'éthylhydroxy-propanediol, lesdits trois cosolvants au moins étant présents en combinaison dans l'encre jet d'encre à une concentration allant de 10 % en poids à 25 % en poids, l'un au moins desdits trois cosolvants étant le diglycérol ; et
b) un colorant.

2. Composition d'encre jet d'encre selon la revendication 1, dans laquelle le glycérol est présent à une concentration allant de 0,1 % en poids à 5 % en poids ; le tétraéthylène glycol est présent à une concentration allant de 0,1 % en poids à 10 % en poids ; le diglycérol est présent à une concentration allant de 0,1 % en poids à 10 % en poids ; composition d'encre jet d'encre selon la revendication 1, dans laquelle le 1,5-pentanediol est présent à une concentration allant de 0,1 % en poids à 10 % en poids ; dans laquelle le 2-pyrrolidone est présent à une concentration allant de 0,1 % en poids à 10 % en poids et l'éthylhydroxy-propanediol est présent à une concentration allant de 0,1 % en poids à 10 % en poids.

3. Composition d'encre jet d'encre selon l'une quelconque des revendications 1 et 2, comprenant, en outre, de 0,1 % en poids à 3 % en poids de nitrate de magnésium.

4. Composition d'encre jet d'encre selon l'une quelconque des revendications 1 à 3, dans laquelle le colorant est le jaune Y-1189.

5. Composition d'encre jet d'encre selon l'une quelconque des revendications 1 à 4, dans laquelle au moins les trois solvants sont le diglycérol, l'éthylhydroxy-propanediol et le 2-pyrrolidone.

6. Procédé d'impression, comprenant la projection d'une encre jet d'encre à partir d'un dispositif d'impression excentrée, le dispositif d'impression excentrée comprenant :
a) une cartouche d'encre,
b) des tubes de système de distribution d'encre, et
c) une tête d'impression,
lesdits tubes de distribution d'encre étant configurés pour transférer l'encre jet d'encre de la cartouche d'encre à la tête d'impression, ladite encre jet d'encre comprenant :
a) un véhicule liquide aqueux comprenant au moins trois cosolvants sélectionnés dans le groupe constitué par le tétraéthylène glycol, le glycérol, le diglycérol, le 1,5-pentanediol, le 2-pyrrolidone, l'éthylhydroxy-propanediol, lesdits trois cosolvants au moins étant présents en combinaison dans l'encre jet d'encre à une concentration allant de 10 % en poids à 25 % en poids, l'un desdits trois cosolvants au moins étant le diglycérol ; et
b) un colorant.

7. Procédé selon la revendication 6, dans lequel les trois colorants au moins diminuent la perte de vapeur et l'obstruction desdits tubes de système de distribution d'encre.

8. Procédé selon l'une quelconque des revendications 6 et 7, dans lequel l'encre jet d'encre comprend de 0,1 % en poids à 3 % en poids de nitrate de magnésium.

9. Procédé selon l'une quelconque des revendications 6 à 8, dans lequel le colorant est le jaune Y-1189.

10. Procédé selon l'une quelconque des revendications 6 à 9, dans lequel au moins trois solvants sont le diglycérol, l'éthylhydroxy-propanediol et le 2-pyrrolidone.
